# EUROPÄISCHE PATENTSCHRIFT

(11) **EP 0 894 579 B1**
(45) Veröffentlichungstag und Bekanntmachung des Hinweises auf die Patenterteilung: **19.03.2003**
(21) Anmeldenummer: 98113390.3
(22) Anmeldetag: 17.07.1998
(51) Int. Cl.: B25H 1/00, B23Q 11/10

(54) **Bohrmaschinenständer, insbesondere für Gesteinsbohrer, mit einem Wasserabsaugring**
Drill stand, particularly for stone drills, with a water suction ring
Support pour perceuse, notamment pour foreuse à béton, avec un anneau d'aspiration d'eau

(30) Priorität: 24.07.1997 DE 19731775
(43) Veröffentlichungstag der Anmeldung: 03.02.1999
(73) Patentinhaber: Rothenberger Werkzeuge Aktiengesellschaft, 65779 Kelkheim / Ts. (DE)
(72) Erfinder: Rothenberger, Bernd, 61476 Krinberg (DE); Fuhr, Jürgen, 65779 Kelkheim (DE)
(74) Vertreter: Zapfe, Hans, Dipl.-Ing.

(56) Entgegenhaltungen:
- DE-A- 3 324 615
- DE-A- 3 334 752
- FR-A- 2 725 151
- US-A- 4 029 160
- US-A- 4 468 159
- US-A- 4 930 585
- US-A- 5 558 476

## Beschreibung

Die Erfindung betrifft einen Bohrmaschinenständer, insbesondere für Gesteinsbohrer, mit einer Fußplatte und einer Standsäule, an der ein Schlitten mit einer Aufnahme für eine Bohrmaschine geführt ist, deren Bohrachse auf eine Arbeitsfläche ausrichtbar ist, und mit einem Wasserabsaugring, der einen elastischen Dichtring aufweist und gegenüber dem Bohrmaschinenständer beweglich gehalten und von diesem abnehmbar ist.

Bei Bohrmaschinenständem dieser Art liegt die Bohrachse auf der dem Flächenschwerpunkt der Fußplatte gegenüberliegenden Seite der Standsäule, damit in die Aufstellfläche des Ständers eine Bohrung eingebracht werden kann, und zwar auch in Raumecken. Die Aufstellfläche besteht dabei aus Natur- und Kunststein, aus Beton u. dgl. Als Bohrer kommen vorzugsweise Diamant-Bohrkronen, sog. "Kernbohrer" infrage, die während des Bohrens durch große Wassermengen gekühlt werden müssen. Hierfür sind eine Wasserzufuhr und ein Wasserabsaugring vorgesehen, der für über-Kopf-Arbeiten sogar zwingend vorgeschrieben ist.

Der Ausdruck "Standsäule" besagt nicht, daß deren Achse beim Betrieb senkrecht stehen muß; die Standsäule kann vielmehr gegenüber der Fußplatte schwenkbar sein, und die Fußplatte kann sowohl auf Fußböden als auch an Wänden und Deckenunterseiten, also in über-Kopf-Lage, angebracht werden. Dabei wird in der Regel die Fußplatte mittels einer Vakuumeinrichtung oder einer Dübelverbindung in größtmöglicher Nähe der herzustellenden Bohrung mit der anzubohrenden Fläche verbunden. Die Aufstellfläche wird daher zutreffender als "Arbeitsfläche" bezeichnet.

Ein Problem besteht hierbei bezüglich der - lösbaren - Verbindung mit dem Wasserabsaugring, der an seiner unteren Umlaufkante einen weichen, elastomeren Dichtungsring trägt. Dieser soll auch dann einen Wasseraustritt gegenüber der Arbeitsfläche verhindern, wenn diese uneben ist, z.B. durch unregelmäßig verlegte Boden- oder Wandplatten (Fugensprünge), durch Welligkeiten in der Arbeitsfläche und/oder durch eine Schiefstellung der Arbeitsfläche gegenüber der Bohrachse. Der elastomere Dichtungsring trägt bereits - begrenzt - zum Ausgleich dieser Bodenunebenheiten bei.

Durch einen Katalog der Anmelderin "Lieferprogramm Diamanttechnik "95/96", Seiten 3, 6, 7 und 9 bis 13, ist es bekannt, zwischen Wasserabsaugring und der Verbindungsstelle von Fußplatte und Standsäule einen aus zwei Winkelteilen mit starren, hakenförmig ausgebildeten Enden bestehenden Halter vorzusehen, der um eine Achse schwenkbar ist, die einen verhältnismäßig großen Abstand von der Arbeitsfläche aufweist und jenseits der Standsäule liegt.. Die Enden sind ähnlich wie die Ausfall-Enden von Fahrradgabeln ausgebildet. Diese Art der Anbringung ermöglicht zwar eine weitere Ausweichbewegung des Wasserabsaugrings, erzwingt aber dessen seitliches Verschieben und eine Schrägstellung, wenn sich seine Winkelstellung gegenüber der Fußplatte ändert. Außerdem ist die Anbringung umständlich durchzuführen, und es muß sorgfältig darauf geachtet werden, daß sich - insbesondere bei Wand- und Deckenarbeiten - der Wasserabsaugring nicht von der Fußplatte lösen kann und daß die Abdichtwirkung erhalten bleibt.

Durch die DE-C-33 34 752 ist es bekannt, den zweiteiligen Wasserabsaugring eines Bohrmaschinenständers der gattungsbildenden Bauart mittels einer Bügelfeder, die weit ausladend an der Stativsäule befestigt ist, gegen das Bohrgut bzw. die Arbeitsfläche zu drücken. Diese Bügelfeder drückt mit zwei Auflagepunkten an zwei etwa diametral gegenüberliegenden Stellen auf den Wasserabsaugring, so daß in gewisser Weise eine kardanische Beweglichkeit des Wasserabsaugrings gegenüber dem Bohrmaschinenständer gegeben ist. Eine Befestigung des Wasserabsaugrings an der Fußplatte oder am Bohrmaschinenständer wird hierdurch jedoch nicht bewirkt, so daß der Wasserabsaugring bei Arbeiten an Wänden und in über-Kopf-Lage, in der die Verwendung eines Wasserabsaugrings zwingend vorgeschrieben ist, deutlich erschwert wird. Die Fußplatte besitzt auch keine Ausnehmung mit seitlichen Vorsprüngen, die den Wasserabsaugring etwa halbkreisförmig umschließen. Gegen seitliches Verschieben wird der Wasserabsaugring allenfalls durch den Kernbohrer und eine elastische Membran gehalten, durch die der Kernbohrer hindurchgeführt ist.

Der Erfindung liegt daher die Aufgabe zugrunde, einen Bohrmaschinenständer der eingangs beschriebenen Gattung anzugeben, bei dem der Wasserabsaugring einfach zu montieren und (zu Transportzwecken) zu demontieren ist und dennoch gegenüber der Fußplatte eine zuverlässige Verbindung schafft, die sich durch äußere Kräfte nicht unbeabsichtigt lösen kann und die die Abdichtwirkung gegenüber der Arbeitsfläche beibehält.

Die Lösung der gestellten Aufgabe erfolgt daher bei dem eingangs angegebenen Bohrmaschinenständer erfindungsgemäß dadurch, daß der Wasserabsaugring auf seinem Umfang über zwei Rastklinken mit der Fußplatte verbunden ist, wobei mindestens eine der Rastklinken gegen eine Rückstellfeder schwenkbar ist, und wobei beide Rastklinken gegenüber dem Wasserabsaugring unabhängig voneinander und parallel zur Bohrachse verstellbar sind.

Diese Lösung führt zu den Vorteilen, daß der Wasserabsaugring einfach zu montieren und (zu Transportzwecken) zu demontieren ist und dennoch gegenüber der Fußplatte eine zuverlässige Verbindung schafft, die sich durch äußere Kräfte nicht unbeabsichtigt lösen kann. Die Verbindung geschieht ganz einfach durch "Einklicken" der Rastklinken, die durch den Ort ihrer Anbringung auf dem Umfang des Wasserabsaugrings nur geringe Abstände von der Bohrachse und von der Arbeitsfläche aufweisen. Durch die üblichen Spiele bzw. Toleranzen der Rastklinken an ihren Befestigungs stellen, wird bereits eine Beweglichkeit des Wasserabsaugrings geschaffen, die bei nicht allzu großen Unebenheiten der Arbeitsfläche ausreicht, um mit Unterstützung durch die Elastizität des Dichtrings die erforderliche Abdichtwirkung beizubehalten.

Es ist im Zuge weiterer Ausgestaltungen des Erfindungsgegenstandes besonders vorteilhaft, wenn - entweder einzeln oder in Kombination -:
A) der Wasserabsaugring in bezug auf die Bohrachse durch zwei diametral gegenüberliegende und parallel zur Standsäule verlaufende Spannspindeln mit den Rastklinken verbunden ist,
B) die Fußplatte im Bereich der Bohrachse zwischen zwei Vorsprüngen eine Ausnehmung für die Aufnahme des Wasserabsaugrings aufweist, wobei an jedem Vorsprung ein Haltezapfen angeordnet ist, und wenn die Rastklinken einerseits mit den Haltezapfen und andererseits mit den Spannspindeln verbunden sind,
C) die Spannspindeln mittels je eines Gewindes in einem Gegengewinde der Rastklinken gelagert sind, und wenn die Gewinde Gelenke für die Rastklinken bilden,
D) die Spannspindeln axial und radial beweglich in Augen geführt sind, die am Wasserabsaugring angeordnet sind, wenn die Spannspindeln über Druckfedem einen einstellbaren Anpreßdruck des Wasserabsaugrings auf die Arbeitsfläche ausüben,
E) die Rastklinken auf gegenüberliegenden Seiten des Wasserabsaugrings über die Spannspindeln ständig mit diesem verbunden und an den Haltezapfen der Fußplatte einrastbar sind, oder wenn - in kinematischer Umkehrung dieser Befestigungsart - die Rastklinken ständig mit den Haltezapfen der Fußplatte verbunden und auf gegenüberliegenden Seiten an den Spannspindeln des Wasserabsaugrings einrastbar sind,
F) die Rastklinken je einen Rastarm und einen Betätigungsarm aufweisen,
G) als Haltezapfen jeweils eine Nivellierspindel dient, von denen mindestens drei zur Ausrichtung der Fußplatte gegenüber einer Aufstellfläche für den Bohrmaschinenständer vorgesehen sind,
H) auf den Nivellierspindeln Muttern angeordnet sind, mittels welcher die Rastklinken gegen die Fußplatte verspannbar sind,
I) jedes Auge eine Bohrung aufweist, in der eine Spannspindel mit einer Schulterfläche angeordnet ist, gegen die sich ein Ende einer Druckfeder abstützt, deren anderes Ende auf dem Auge ruht,
J) die Bohrungen in den Augen an einem Ende einen größeren Durchmesser aufweisen als am anderen Ende,
K) der Wasserabsaugring aus einem Kunststoff besteht und wenn die Augen einteilig angeformt sind,
L) der Wasserabsaugring einen Anschlußstutzen für eine Saugleitung aufweist, dessen Achse in einem der beiden Quadranten des Wasserabsaugrings liegt, die der Standsäule zugekehrt sind,
M) die Ausnehmung für den Wasserabsaugring in der Draufsicht teilkreisförmig ausgebildet ist, und/oder wenn
N) auf dem Umfang der Ausnehmung und auf der Unterseite der Fußplatte ein bogenförmig ausgebildeter Zentrierhebel angeordnet ist, dessen Ende zwischen einer Ruhestellung und einer Stellung in der Bohrachse verschwenkbar ist.

Durch das Merkmal A) wird erreicht, daß die Lage des Wasserabsaugrings gegenüber der Fußplatte gezielt eingestellt werden kann, und zwar durch jede der Spannspindeln einzeln. Soweit die Toleranzen ausreichend sind, wird dadurch in gewissem Umfange ein einstellbares und definiertes Kardangelenk gebildet.

Durch die Vorsprünge nach Merkmal B) wird erreicht, daß die Angriffsstellen der Rastklinken in größtmögliche Nähe einer Durchmesserlinie des Wasserabsaugrings gelegt werden, wobei die Durchmesserlinie eine der Achsen des kardanischen Gelenks ist.

Durch das Merkmal C) wird erreicht, daß durch das Zusammenwirken der Spannspindeln und der Rastklinken Dreh- oder Schwenkgelenke gebildet werden.

Durch die Druckfedern nach Merkmal D) wird erreicht, daß der Wasserabsaugring mit einstellbaren Vorspannungen an die Arbeitsfläche anpreßbar ist, wodurch eine exakt geführte Selbsteinstellung des Wasserabsaugrings gegenüber der Arbeitsfläche ermöglicht wird.

Das Merkmal E) definiert zwei einfache alternative Lösungen für die Befestigung und die Wirkungsrichtung der Rastklinken.

Das Merkmal F) schafft die Voraussetzungen für eine einfache Bedienung der Rastklinken durch Fingerdruck.

Das Merkmal G) lehrt eine vereinfachende Doppelfunktion von Nivellierspindeln und Haltezapfen.

Das Mermal H) schafft eine zusätzliche Sicherheit gegen ein ungewolltes Lösen der Rastklinken. Die Beweglichkeit an anderen Stellen der Verbindungen der Rastklinken wird dadurch nicht beeinträchtigt.

Das Merkmal I) schafft eine einfache Lagerung der Druckfedern auf den Spannspindeln.

Das Merkmal J) verbessert die Beweglichkeit um die Durchmesserlinie und um eine hierzu senkrecht stehende imaginäre Gelenkachse.

Das Merkmal K) verbilligt die Herstellung und verringert das Gewicht, was insbesondere für Über-Kopf-Arbeiten vorteilhaft ist.

Durch das Merkmal L) wird die Einrückbarkeit der Bohrachse in Raumecken verbessert.

Ein Ausführungsbeispiel des Erfindungsgegenstandes wird nachfolgend anhand der Figuren 1 bis 7 näher erläutert:

Es zeigen:
- Figur 1: eine Seitenansicht eines Bohrmaschinenständers bei abgenommenem Wasserabsaugring,
- Figur 2: eine senkrechte Draufsicht auf den Gegenstand von Figur 1,
- Figur 3: eine Unteransicht des bohrachsenseitigen Teils der Fußplatte mit eingesetztem Wasserabsaugring in vergrößertem Maßstab,
- Figur 4: eine Seitenansicht des Gegenstandes nach Figur 3 in Richtung des Pfeils IV in Figur 3,
- Figur 5: eine Draufsicht auf das Spritzteil des Wasserabsaugrings,
- Figur 6: einen Axialschnitt durch den Gegenstand von Figur 5 entlang der Linie VI-VI in Figur 5, und
- Figur 7: eine Draufsicht auf einen komplettierten Bohrständer in einer Raumecke.

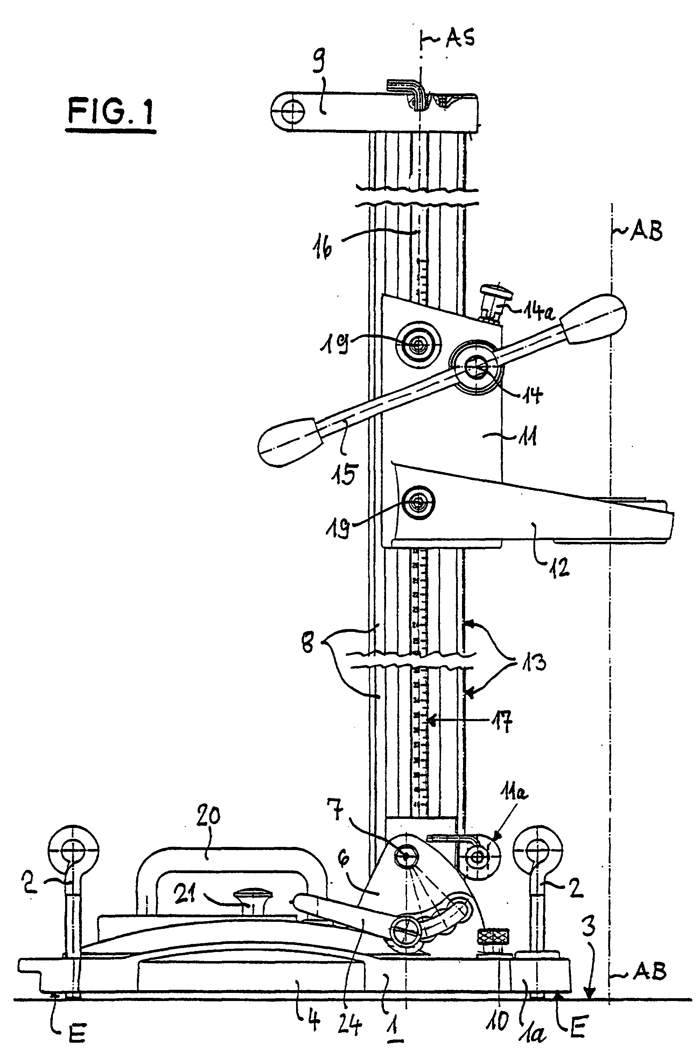

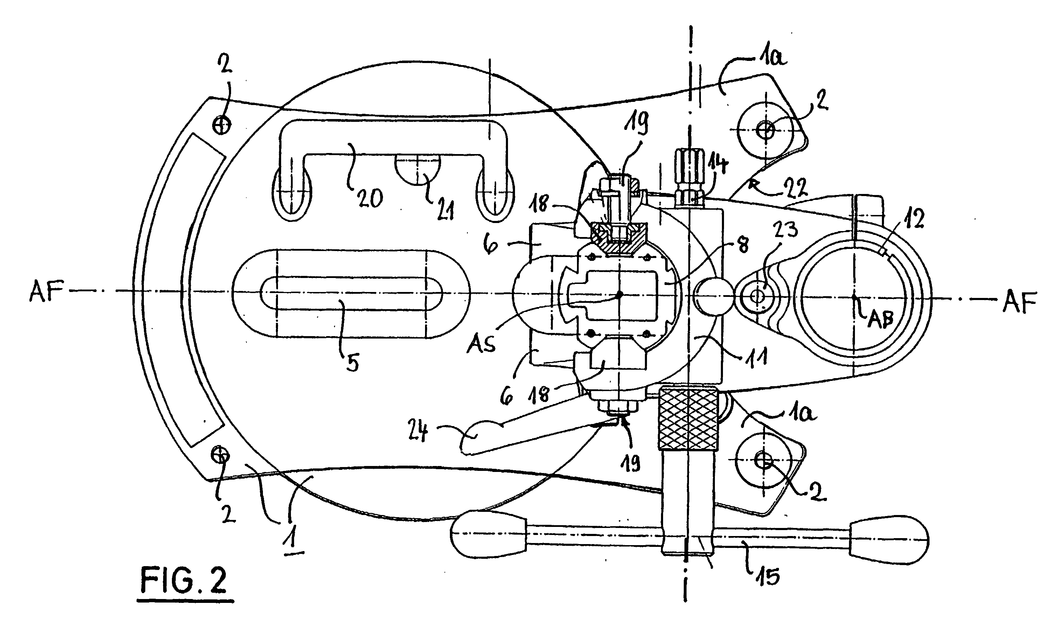

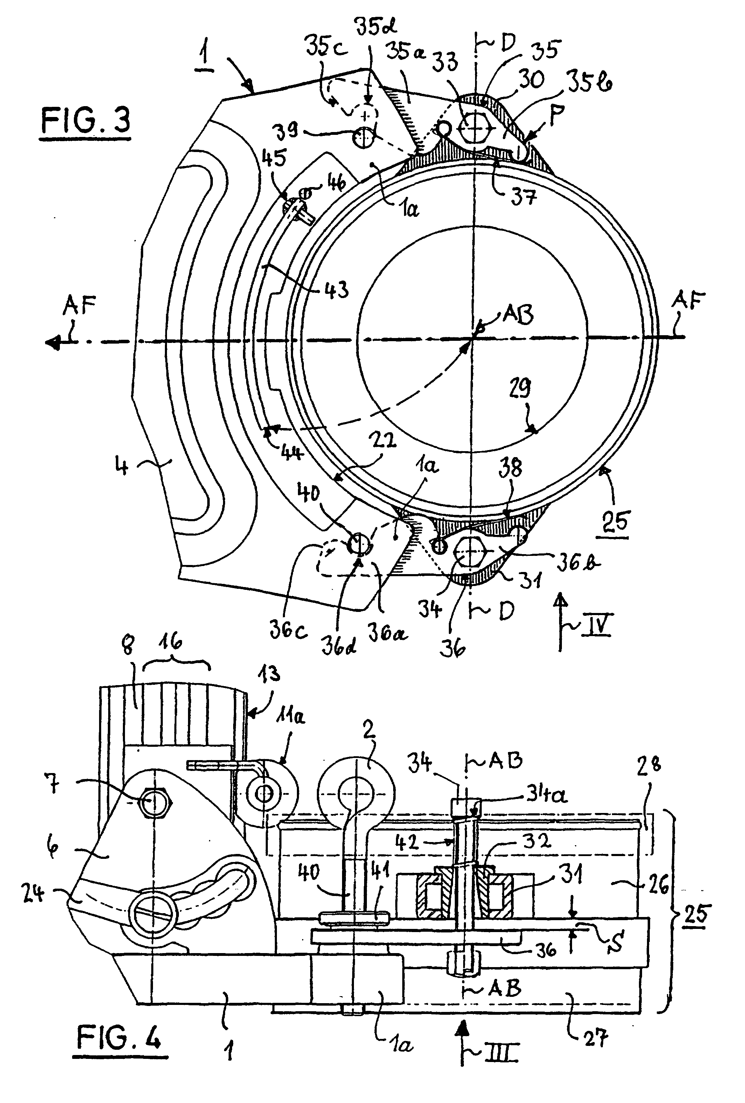

In den Figuren 1 und 2 ist eine Fußplatte 1 mit einer virtuellen Bezugsebene E-E dargestellt, die über vier Nivellierspindeln 2 in eine waagrechte Lage gebracht werden kann, beispielsweise parallel zu einer Arbeitsfläche 3. In einer Kammer 4 kann eine Vakuumsaugvorrichtung untergebracht werden. Alternativ kann die Fußplatte 1 mittels eines Langlochs 5, eines Dübels und einer Spannschraube auf oder an der Arbeitsfläche 3 befestigt werden. Ein in Figur 3 näher dargestellter Zentrierhebel ist über einen Drehknopf 10 verschwenkbar.

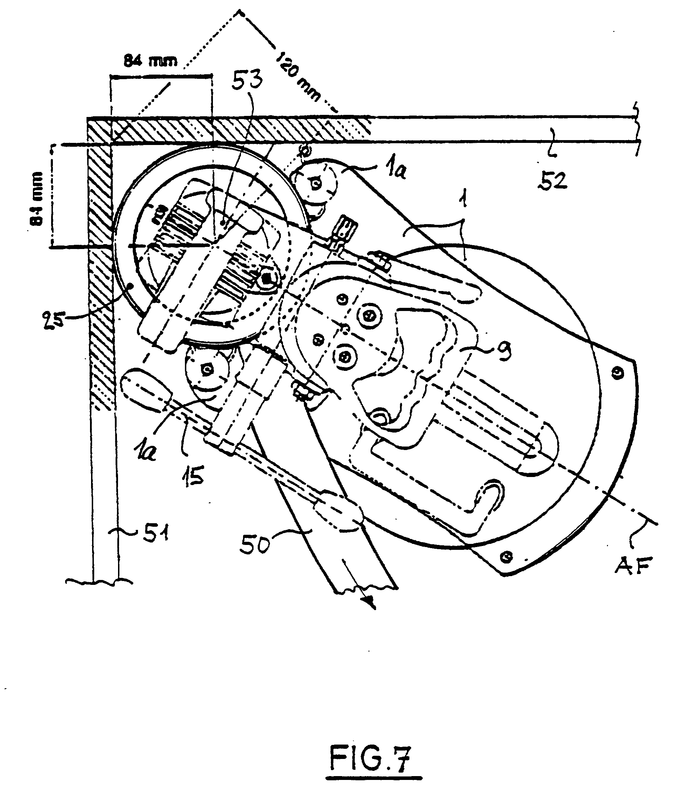

Auf der Fußplatte 1 ist mittels zweier Lagerböcke 6 und einer Schwenkachse 7 eine feststellbare Standsäule 8 angeordnet, die an ihrem jenseitigen Ende einen Tragegriff 9 trägt. Ein Schlitten 11 mit einer Aufnahme 12 für eine elektrische Bohrmaschine 53 (Figur 7), die eine Bohrachse AB-AB vorgibt, ist auf der Standsäule 8 auf und ab verfahrbar. Zu diesem Zweck besitzen die Standsäule 8 eine lineare Zahnreihe 13 und der Schlitten eine Welle 14 mit einem hier nicht gezeigten Ritzel, die durch einen von einer Seite auf die andere umsteckbaren Handhebel 15 antreibbar ist. Die Welle 14 ist durch einen Arretierbolzen 14a feststellbar und läuft bei ihrer Abwärtsbewegung gegen einen verstellbaren Anschlagkörper 11a.

Die Standsäule 8 besitzt auf diametral gegenüberliegenden Seiten zwei trapezförmige Führungsnuten 16, auf deren Nutengrund eine Skala 17 angeordnet ist. Die Führung geschieht über komplementäre trapezförmig prismatische Gleitkörper 18 (Figur 2), die mit Hilfe von vier Spannschrauben 19 gegen die Standsäule 8 verspannbar sind. Mittels eines weiteren Traggriffs 20, unter dem sich für den Vakuumbetrieb ein Belüftungsventil 21 befindet, läßt sich die Vorrichtung transportieren und beim Anbringen halten.

Wie aus Figur 2 zusätzlich hervorgeht, besitzt die Fußplatte 1 eine Fußplatten-Längsachse AF-AF, die zusammen mit der Säulenachse AS-AS eine Symmetrieebene definiert. In der Fußplatte 1 befindet sich am bohrachsenseitigen Ende eine teilkreisförmige Ausnehmung 22, die zur Bohrachse AB-AB konzentrisch verläuft. Beiderseits der Ausnehmung 22 befindet sich in Vorsprüngen 1a der Fußplatte 1 je eine der Nivellierspindeln 2, die einen Doppelzweck verfolgen, der weiter unten noch näher erläutert wird. Eine am Schlitten 11 angebrachte Wasserwaage 23 dient zur Nivellierung der Fußplatte 1 bei senkrecht stehender Standsäule 8, deren Feststellung gegenüber der Fußplatte 1 durch einen Spannhebel 24 ermöglicht wird.

Wie aus den Figuren 3 und 4 hervorgeht, befindet sich in der Ausnehmung 22 ein Wasserabsaugring 25 mit einem ringförmigen Kammerkörper 26 aus einem Kunststoff. Dieser trägt auf seiner Unterseite einen weichen, elastomeren Dichtring 27 und auf seiner Oberseite eine strichpunktiert dargestellte Lochmembran 28 aus einem elastomeren Werkstoff mit einer konzentrischen Mittenöffnung 29 für den Durchtritt eines nicht dargestellten Bohrers mit der Bohrachse AB. Der Kammerkörper 26 besitzt auf diametral gegenüberliegenden Seiten einer quer zur Fußplatten-Längsachse AF-AF verlaufenden Durchmesserlinie D-D zwei angespritzte Augen 30 und 31 mit eingesetzten Buchsen 32 aus Metall, durch die je eine Spannspindel 33 und 34 hindurchgeführt ist.

Die Innenbohrungen der Buchsen 32 erlauben eine begrenzte Schwenkbewegung des Wasserabsaugrings 25 auf den Spannspindeln 33 und 34 um die Durchmesserlinie D-D. Unterhalb der Augen 30 und 31 ist auf den Spannspindeln 33 und 34 in spiegelbildlicher Anordnung je eine Rastklinke 35 und 36 gelagert, die als Doppelhebel ausgebildet ist und einen Rastarm 35a und 36a und einen Betätigungsarm 35b und 36b aufweist. Die Rastarme 35a und 36a besitzen Auflaufschrägen 35c und 36c und Rastausnehmungen 35d und 36d. Mittels der Betätigungsarme 35b und 36b sind die Rastklinken 35 und 36 gegen die Kraft je einer Rückstellfeder 37 und 38 in einer Ebene verschwenkbar, die zur Bezugsebene E-E (Figur 1) parallel verläuft. Durch Einschieben des Wasserabsaugrings 25 von rechts nach links schnappen die Rastklinken 35 und 36 mittels der Rastausnehmungen 35d und 36d auf Haltezapfen 39 und 40 auf, die mit den Nivellierspindeln 2 identisch sind, aber nicht sein müssen. Dadurch wird der Wasserabsaugring 25 zuverlässig an der Fußplatte 1 gehalten.

Ein Lösen des Wasserabsaugrings 25 erfolgt durch Druck auf die Betätigungsarme 35b und 36b. Dieser Vorgang ist in Figur 3, oben, durch den Pfeil P angedeutet. Wie aus Figur 4 ersichtlich ist, werden die Rastklinken 35 und 36 auf der Fußplatte 1 durch gerändelte Muttern 41 festgespannt. Gemäß Figur 4 besitzen die Spannspindeln 33 und 34 je eine Schulterfläche 34a, gegen die sich eine Druckfeder 42 abstützt. Deren anderes Ende drückt mittels der Buchse 32 auf das jeweilige Auge 30 bzw. 31. Die unteren Enden der Spannspindeln 33 und 34 sind mittels nicht dargestellter Gewinde in den Rastklinken 35 und 36 gelagert. Dadurch kann die Vorspannung der Druckfedern 42 und damit die Anpreßkraft des Dichtrings 27 auf der Arbeitsfläche 3 (Figur 1) verändert werden. Stellt die Bedienungsperson beim Arbeiten eine Undichtigkeit fest, so braucht lediglich die betreffende Spannspindel 33 und/oder 34 entsprechend nachgestellt werden, um einen ungewollten Wasserabfluß abzustellen. Die Anordnung ist dabei so getrof fen, daß zwischen den Unterseiten der Augen 30 und 31 ein Spalt "S" von wenigen Millimetern verbleibt. Dadurch erhält die Aufhängung des Wasserabsaugrings 25 die Wirkung eines kardanischen Gelenks mit zwei Achsen, von denen eine parallel zur Durchmesserlinie D-D und die andere parallel zu Fußplatten-Längsachse AF-AF verläuft. Diese Wirkung unterstützt die Elastizität des Dichtungsrings 27.

Figur 3 ist noch zu entnehmen, daß auf der Unterseite der Fußplatte 1 und auf dem Umfang der Ausnehmung 22 ein hierzu geometrisch ähnlich gebogener Zentrierhebel 43 angordnet ist, dessen freies Ende 44 um einen Drehzapfen 45 bis zur Bohrachse AB verschwenkbar ist, um den Bohrmaschinenständer genau zentrieren zu können. Der Drehzapfen 45 ist mit dem Drehknopf 10 verbunden (Figur 1). Die zentrische Lage des Zentrierhebels 43 ist durch einen Anschlag 46 festgelegt.

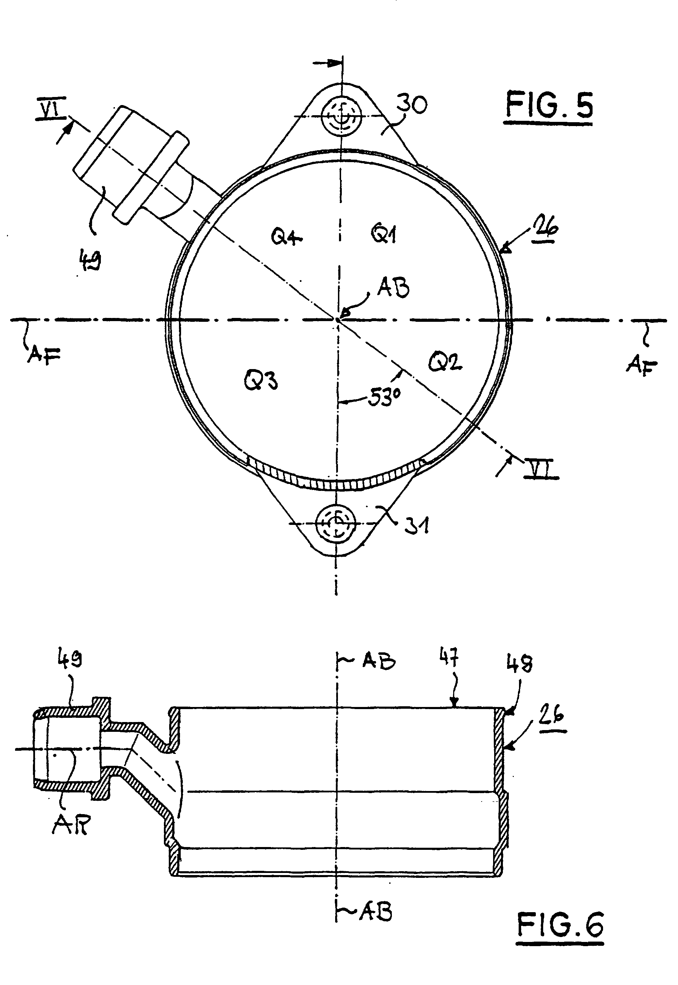

In den Figuren 5 und 6 ist der im wesentlichen zylindrische Kammerkörper 26 mit den angespritzten Augen 30 und 31 näher dargestellt. Er besitzt an seiner ringförmigen Oberkante 47 einen umlaufenden Ringwulst 48, auf den die aus Gummi bestehende Lochmembran 28 (Figur 4) durch Krempeln aufsetzbar ist. Weiterhin besitzt der Kammerkörper 26, den man sich in vier Quadranten Q1, Q2, Q3 und Q4 unterteilt denken kann, in dem Quadranten Q4 einen Anschlußstutzen 49 für eine Saugleitung 50 (Figur 7). Dieser Anschlußstutzen 49 ist nach oben abgekröpft, damit er mit der Saugleitung 50 oberhalb der Fußplatte 1 liegt. Die Quadranten Q3 und Q4 sind der Standsäule 8 zugekehrt.

Die Achse AR des Anschlußstutzens ist radial ausgerichtet, und der Winkel zwischen der Achse AR und der Durchmesserlinie D-D beträgt zwischen 45° und 60°, vorzugsweise etwa 53°.

Figur 7 zeigt das beispielhafte Arbeiten mit einer erfindungsgemäßen Vorrichtung unter Einsatz eine Kronenbohrers mit einem Durchmesser von 130 mm in einer Raumecke zwischen zwei Wänden 51 und 52. Die Konturen der hier nicht dargestellten Augen und der Rastklinken, bzw. deren Projektion auf die Arbeitsfläche 3 ist dabei so gewählt, daß keine Behinderung eintritt; insbesondere werden dabei die Betätigungsarme 35b und 36b nicht ungewollt verstellt. In Figur 7 ist auch eine Bohrmaschine 53 angedeutet.

Unter dem Begriff "Bohrmaschine" ist nicht nur eine Handbohrmaschine zu verstehen, sondern jedes Bohraggregat mit einem Antriebsmotor, einem Untersetzungsgetriebe und einer Befestigungsvorrichtung für einen Bohrer, und zwar auch dann, wenn dieses Bohraggregat ständig mit dem Schlitten 11 verbunden ist.

### Bezugszeichenliste:

- 1: Fußplatte
- 1a: Vorsprünge
- 2: Nivellierspindeln
- 3: Arbeitsfläche
- 4: Kammer
- 5: Langlochs
- 6: Lagerböcke
- 7: Schwenkachse
- 8: Standsäule
- 9: Tragegriff
- 10: Drehknopf
- 11: Schlitten
- 11a: Anschlagkörper
- 12: Aufnahme
- 13: Zahnreihe
- 14: Welle
- 14a: Arretierbolzen
- 15: Handhebel
- 16: Führungsnuten
- 17: Skala
- 18: Gleitkörper
- 19: Spannschrauben
- 20: Traggriff
- 21: Belüftungsventil
- 22: Ausnehmung
- 23: Wasserwaage
- 24: Spannhebel
- 25: Wasserabsaugring
- 26: Kammerkörper
- 27: Dichtring
- 28: Lochmembran
- 29: Mittenöffnung
- 30: Auge
- 31: Auge
- 32: Buchsen
- 33: Spannspindel
- 34: Spannspindel
- 34a: Schulterfläche
- 35: Rastklinke
- 35a: Rastarm
- 35b: Betätigungsarm
- 35c: Auflaufschräge
- 35d: Rastausnehmung
- 36: Rastklinke
- 36a: Rastarm
- 36b: Betätigungsarm
- 36c: Auflaufschräge
- 36d: Rastausneghmung
- 37: Rückstellfeder
- 38: Rückstellfeder
- 39: Haltezapfen
- 40: Haltezapfen
- 41: Muttern
- 42: Druckfeder
- 43: Zentrierhebel
- 44: freies Ende
- 45: Drehzapfen
- 46: Anschlag
- 47: Oberkante
- 48: Ringwulst
- 49: Anschlußstutzen
- 50: Saugleitung
- 51: Wand
- 52: Wand
- 53: Bohrmaschine

- AB, AB-AB,: Bohrachse
- AF-AF: Fußplatten-Längsachse
- AR: Achse Anschlustutzen
- AS-AS: Säulenachse
- D-D: Durchmesserlinie
- E-E: Bezugsebene
- P: Pfeil
- Q1, Q2, Q3, Q4: Quadranten
- S: Spalt

## Patentansprüche

1. Bohrmaschinenständer, insbesondere für Gesteinsbohrer, mit einer Fußplatte (1) und einer Standsäule (8), an der ein Schlitten (11) mit einer Aufnahme (12) für eine Bohrmaschine geführt ist, deren Bohrachse (AB) auf eine Arbeitsfläche ausrichtbar ist, und mit einem Wasserabsaugring (25), der einen elastischen Dichtring (27) aufweist und gegenüber dem Bohrmaschinenständer beweglich gehalten und von diesem abnehmbar ist, **dadurch gekennzeichnet, daß** der Wasserabsaugring (25) auf seinem Umfang über zwei Rastklinken (35, 36) mit der Fußplatte (1) verbunden ist, wobei mindestens eine der Rastklinken gegen eine Rückstellfeder (37, 38) schwenkbar ist, und wobei beide Rastklinken gegenüber dem Wasserabsaugring (25) unabhängig voneinander und parallel zur Bohrachse verstellbar sind.

2. Bohrmaschinenständer nach Anspruch 1, **dadurch gekennzeichnet, daß** der Wasserabsaugring (25) in bezug auf die Bohrachse (AB) durch zwei diametral gegenüberliegende und parallel zur Standsäule (8) verlaufende Spannspindeln (33, 34) mit den Rastklinken (35, 36) verbunden ist.

3. Bohrmaschinenständer nach Anspruch 1, **dadurch gekennzeichnet, daß** die Fußplatte (1) im Bereich der Bohrachse (AB) zwischen zwei Vorsprüngen (1a) eine Ausnehmung (22) für die Aufnahme des Wasserabsaugrings (25) aufweist, wobei an jedem Vorsprung (1a) ein Haltezapfen (39, 40) angeordnet ist, und daß die Rastklinken (35, 36) einerseits mit den Haltezapfen (39, 40) und andererseits mit den Spannspindeln (33, 34) verbunden sind.

4. Bohrmaschinenständer nach Anspruch 2, **dadurch gekennzeichnet, daß** die Spannspindeln (33, 34) mittels je eines Gewindes in einem Gegengewinde der Rastklinken (35, 36) gelagert sind, und daß die Gewinde Gelenke für die Rastklinken (35, 36) bilden.

5. Bohrmaschinenständer nach Anspruch 2, **dadurch gekennzeichnet, daß** die Spannspindeln (33, 34) axial und radial beweglich in Augen (30, 31) geführt sind, die am Wasserabsaugring (25) angeordnet sind, daß die Spannspindeln (33, 34) über Druckfedern (42) einen einstellbaren Anpreßdruck des Wasserabsaugrings (25) auf die Arbeitsfläche ausüben.

6. Bohrmaschinenständer nach Anspruch 3, **dadurch gekennzeichnet, daß** die Rastklinken (35, 36) auf gegenüberliegenden Seiten des Wasserabsaugrings (25) über die Spannspindeln (33, 34) ständig mit diesem verbunden und an den Haltezapfen (39, 40) der Fußplatte (1) einrastbar sind.

7. Bohrmaschinenständer nach Anspruch 3, **dadurch gekennzeichnet, daß** die Rastklinken (35, 36) ständig mit den Haltezapfen (39, 40) der Fußplatte (1) verbunden und auf gegenüberliegenden Seiten an den Spannspindeln (33, 34) des Wasserabsaugrings (25) einrastbar sind.

8. Bohrmaschinenständer nach Anspruch 1, **dadurch gekennzeichnet, daß** die Rastklinken (35, 36) je einen Rastarm (35a, 36a) und einen Betätigungsarm (35b, 36b) aufweisen.

9. Bohrmaschinenständer nach Anspruch 1, **dadurch gekennzeichnet, daß** als Haltezapfen (39, 40) jeweils eine Nivellierspindel (2) dient, von denen mindestens drei zur Ausrichtung der Fußplatte (1) gegenüber einer Aufstellfläche (3) für den Bohrmaschinenständer vorgesehen sind.

10. Bohrmaschinenständer nach Anspruch 9, **dadurch gekennzeichnet, daß** auf den Nivellierspindeln (2) Muttern (41) angeordnet sind, mittels welcher die Rastklinken (35, 36) gegen die Fußplatte (1) verspannbar sind.

11. Bohrmaschinenständer nach Anspruch 5, **dadurch gekennzeichnet, daß** jedes Auge (30, 31) eine Bohrung aufweist, in der eine Spannspindel (33, 34) mit einer Schulterfläche (34a) angeordnet ist, gegen die sich ein Ende einer Druckfeder (42) abstützt, deren anderes Ende auf dem Auge (30, 31) ruht.

12. Bohrmaschinenständer nach Anspruch 11 **dadurch gekennzeichnet, daß** die Bohrungen in den Augen (30, 31) an einem Ende einen größeren Durchmesser aufweisen als am anderen Ende.

13. Bohrmaschinenständer nach Anspruch 5, **dadurch gekennzeichnet, daß** der Wasserabsaugring (25) aus einem Kunststoff besteht und daß die Augen (30, 31) einteilig angeformt sind.

14. Bohrmaschinenständer nach Anspruch 1, **dadurch gekennzeichnet, daß** der Wasserabsaugring (25) einen Anschlußstutzen (49) für eine Saugleitung (50) aufweist, dessen Achse (AR) in einem der beiden Quadranten (Q3, Q4) des Wasserabsaugrings (25) liegt, die der Standsäule (8) zugekehrt sind.

15. Bohrmaschinenständer nach Anspruch 3, **dadurch gekennzeichnet, daß** die Ausnehmung (22) für den Wasserabsaugring (25) in der Draufsicht teilkreisförmig ausgebildet ist.

16. Bohrmaschinenständer nach Anspruch 15, **dadurch gekennzeichnet, daß** auf dem Umfang der Ausnehmung (22) und auf der Unterseite der Fußplatte (1) ein bogenförmig ausgebildeter Zentrierhebel (43) angeordnet ist, dessen Ende (44) zwischen einer Ruhestellung und einer Stellung in der Bohrachse (AB) verschwenkbar ist.

## Claims

1. Drilling machine stand, in particular for rock drills, comprising a base plate (1) and a stand column (8) on which is guided a carriage (11) with a holder (12) for a drilling machine the drilling axis (AB) of which is alignable to a work surface, and with a water suction ring (25) comprising an elastic sealing ring (27) and held to be movable relative to the drilling machine stand and removable from the latter, **characterised in that** the water suction ring (25) is peripherally joined to the base plate (1) via two detent levers (35, 36), and at least one of the detent levers is pivotal against a return spring (37, 38), and both detent levers are adjustable relative to the water suction ring (25) independently from each other and parallel to the drilling axis.

2. Drilling machine stand according to Claim 1, **characterised in that** the water suction ring (25) is connected to the detent levers (35, 36) relative to the drilling axis (AB) by two clamping spindles (33, 34) which are positioned diametrically opposite each other and parallel to the stand column (8).

3. Drilling machine stand according to Claim 1, **characterised in that** the base plate (1) comprises in the area of the drilling axis (AB) between two protrusions (1a) a cutout (22) for holding the water suction ring (25), and on each protrusion (1a) is arranged a holding pin (39, 40), and the detent levers (35, 36) are connected on the one side to the holding pins (39, 40) and on the other side to the clamping spindles (33, 34).

4. Drilling machine stand according to Claim 2, **characterised in that** the clamping spindles (33, 34) are mounted by means of each one thread in a counter-thread of the detent levers (35, 36), and the threads form hinges for the detent levers (35, 36).

5. Drilling machine stand according to Claim 2, **characterised in that** the clamping spindles (33, 34) are guided so as to be axially and radially movable in eyes (30, 31) which are positioned on the water suction ring (25), and the clamping spindles (33, 34) exert via pressure springs (42) an adjustable press-on force of the water suction ring (25) onto the work surface.

6. Drilling machine stand according to Claim 3, **characterised in that** the detent levers (35, 36) are on opposite sides of the water suction ring (25) constantly connected thereto via the clamping spindles (33, 34) and detentable at the holding pins (39, 40) of the base plate (1).

7. Drilling machine stand according to Claim 3, **characterised in that** the detent levers (35, 36) are constantly connected to the holding pins (39, 40) of the base plate (1) and detentable on opposite sides on the clamping spindles (33, 34) of the water suction ring (25).

8. Drilling machine stand according to Claim 1, **characterised in that** the detent levers (35, 36) have each a detent arm (35a, 36a) and an operating arm (35b, 36b).

9. Drilling machine stand according to Claim 1, **characterised in that** a respective levelling spindle (2) serves as holding pin (39, 40), at least three of which are provided for alighment of the base plate (1) relative to a setting-down surface (3) for the drilling machine stand.

10. Drilling machine stand according to Claim 9, **characterised in that** on the levelling spindles (2) are arranged nuts (41) by means of which the detent levers (36, 36) can be clamped onto the base plate (1).

11. Drilling machine stand according to Claim 5, **characterised in that** each eye (30, 31) includes a bore in which is arranged a clamping spindle (33, 34) with a shoulder surface (34a) which supports one end of a pressure spring (42) the other end of which rests on the eye (30, 31).

12. Drilling machine stand according to Claim 11, **characterised in that** the bores in the eyes (30, 31) have a larger diameter at one end than at the other end.

13. Drilling machine stand according to Claim 5, **characterised in that** the water suction ring (25) is made of plastic, and the eyes (30, 31) are moulded thereonto.

14. Drilling machine stand according to Claim 1, **characterised in that** the water suction ring (25) comprises a connecting socket (49) of a suction pipe (5) the axis (AR) of which lies in one of the two quadrants (Q3, Q4) of the water suction ring (25) which is facing towards the stand column (8).

15. Drilling machine stand according to Claim 3, **characterised in that** the cutout (22) for the water suction ring (25) is in a top view partially circular.

16. Drilling machine stand according to Claim 5, **characterised in that** on the periphery of the cutout (22) and on the bottom side of the base plate (1) is arranged an arcshaped centring lever (43) the end (44) of which is pivotal between an idle position and a position in the drilling axis (AB).

## Revendications

1. Support de perforatrice en particulier pour foret à pierre, comportant une semelle (1) et une colonne verticale (8) sur laquelle est guidé un chariot (11) avec un logement (12) pour une perforatrice, dont l'axe de perforation (AB) peut être orienté vers une surface de travail, et comportant un anneau d'aspiration d'eau (25) qui présente un joint (27) élastique et est maintenu mobile par rapport au support de perforatrice et démontable de ladite colonne, **caractérisé en ce que** l'anneau d'aspiration d'eau (25) est relié sur sa périphérie via deux loquets d'enclenchement (35, 36) avec la semelle (1), au moins un des loquets d'enclenchement pouvant pivoter à l'encontre d'un ressort de rappel (37, 38), et les deux loquets d'enclenchement étant réglables par rapport à l'anneau d'aspiration d'air (25) indépendamment l'un de l'autre et parallèlement à l'axe de perforation.

2. Support de perforatrice selon la revendication 1, **caractérisé en ce que** l'anneau d'aspiration d'eau (25) est relié aux loquets d'enclenchement (35, 36) par rapport à l'axe de perforation (AB) par deux broches de serrage (33, 34) diamétralement opposées et s'étendant parallèlement à la colonne verticale (8).

3. Support de perforatrice selon la revendication 1, **caractérisé en ce que** la semelle (1) présente dans la région de l'axe de perforation (AB), entre deux saillies (1a), un évidement (22) pour le logement de l'anneau d'aspiration d'eau (25), un tenon de retenue (39, 40) étant agencé sur chaque saillie (1a), et **en ce que** les loquets d'enclenchement (35, 36) sont reliés d'une part avec le tenon de retenue (39, 40) et d'autre part avec les broches de serrage (33, 34).

4. Support de perforatrice selon la revendication 2, **caractérisé en ce que** les broches de serrage (33, 34) sont montées au moyen d'un pas de vis dans un pas de vis complémentaire des loquets d'enclenchement (35, 36), et **en ce que** les pas de vis forment des articulations pour les loquets d'enclenchement (35, 36).

5. Support de perforatrice selon la revendication 2, **caractérisé en ce que** les broches de serrage (33, 34) sont guidées axialement et radialement de manière mobile dans des oeillets (30, 31) qui sont agencés sur l'anneau d'aspiration d'eau (25), **en ce que** les broches de serrage (33, 34) exercent via des ressorts de compression (42) une pression de serrage réglable de l'anneau d'aspiration d'eau (25) sur la surface de travail.

6. Support de perforatrice selon la revendication 3, **caractérisé en ce que** les loquets d'enclenchement (35, 36) sont reliés en permanence à l'anneau d'aspiration d'eau (25) sur des côtés opposés de celui-ci via les broches de serrage (33, 34) et peuvent s'enclencher sur les tenons de retenue (39, 40) de la semelle (1).

7. Support de perforatrice selon la revendication 3, **caractérisé en ce que** les loquets d'enclenchement (35, 36) sont reliés en permanence aux tenons de retenue (39, 40) de la semelle (1) et peuvent s'enclencher sur des côtés opposés sur les broches de serrage (33, 34) de l'anneau d'aspiration d'eau (25).

8. Support de perforatrice selon la revendication 1, **caractérisé en ce que** les loquets d'enclenchement (35, 36) présentent chacun un bras d'enclenchement (35a, 36a) et un bras d'actionnement (35b, 36b).

9. Support de perforatrice selon la revendication 1, **caractérisé en ce qu'**une broche de niveau (2) respective sert de tenon de retenue (39, 40), et au moins trois broches sont prévues pour orienter la semelle (1) par rapport à une surface de mise en place (3) pour le support de perforatrice.

10. Support de perforatrice selon la revendication 9, **caractérisé en ce que** sur les broches de niveau (2) sont agencés des écrous (41) au moyen desquels on peut serrer les loquets d'enclenchement (35, 36) contre la semelle (1).

11. Support de perforatrice selon la revendication 5, **caractérisé en ce que** chaque oeillet (30, 31) présente un perçage dans lequel est agencée une broche de serrage (33, 34) avec une surface d'épaulement (34a) contre laquelle prend appui une extrémité d'un ressort de compression (42), dont l'autre extrémité repose sur l'oeillet (30, 31).

12. Support de perforatrice selon la revendication 11, **caractérisé en ce que** les perçages dans les oeillets (30, 31) présentent à une extrémité un diamètre plus grand qu'à l'autre extrémité.

13. Support de perforatrice selon la revendication 5, **caractérisé en ce que** l'anneau d'aspiration d'eau (25) est en une matière plastique et **en ce que** les oeillets (30, 31) sont moulés d'un seul tenant.

14. Support de perforatrice selon la revendication 1, **caractérisé en ce que** l'anneau d'aspiration d'eau (25) présente un raccord (49) pour une conduite d'aspiration (50) dont l'axe (AR) est situé dans un des deux quadrants (Q3, Q4) de l'anneau d'aspiration d'eau (25) qui sont tournés vers la colonne (8).

15. Support de perforatrice selon la revendication 3, **caractérisé en ce que** l'évidement (22) pour l'anneau d'aspiration d'eau (25) est réalisé en forme de segment de cercle en vue en élévation.

16. Support de perforatrice selon la revendication 15, **caractérisé en ce que** sur la périphérie de l'évidement (22) et sur la face inférieure de la semelle (1) est agencé un levier de centrage (43) réalisé en forme d'arc dont l'extrémité (44) peut pivoter entre une position de repos et une position dans l'axe de perforation (AB).
